# EUROPEAN PATENT SPECIFICATION

(11) **EP 3 403 342 B1**
(45) Date of publication and mention of the grant of the patent: **05.06.2024**
(21) Application number: 16885371.1
(22) Date of filing: 08.07.2016
(51) Int. Cl.: H04J 11/00, H04J 13/00, H04L 5/00

(54) **EVOLVED NODE-B (ENB), USER EQUIPMENT (UE) AND METHODS FOR COMMUNICATION OF A CHANNEL RASTER FREQUENCY OFFSET**
EVOLVED NODE-B (ENB), BENUTZERGERÄT (UE) UND VERFAHREN ZUR KOMMUNIKATION EINES KANALRASTERFREQUENZVERSATZES
NOEUD B ÉVOLUÉ (ENB), ÉQUIPEMENT D'UTILISATEUR (UE) ET PROCÉDÉS DE COMMUNICATION SELON UN DÉCALAGE EN FRÉQUENCE DE TRAME DE CANAL

(30) Priority: 15.01.2016 US 201662279367 P
(43) Date of publication of application: 21.11.2018
(73) Proprietor: Apple Inc., Cupertino, CA 95014 (US)
(72) Inventor: KUMAR, Utsaw, Santa Clara, California 95054 (US); HAN, Seunghee, San Jose, California 95120 (US); CHATTERJEE, Debdeep, Mountain View, California 94041 (US); LEBLANC, James, 65115 Karlstad AB (SE); SJÖBERG, Frank, Karlstad AB 65115 (SE); ISAKSSON, Mikael, 651 15 Karlstad AB (SE); CESARES CANO, Jose A., 81735 Munich (DE); BENDLIN, Ralf Matthias, Portland, Oregon 97229 (US); IOFFE, Anatoliy, Hillsboro, Oregon 98124 (US)
(74) Representative: Wardle, Callum Tarn
(86) International application number: PCT/US2016/041587
(87) International publication number: WO 2017/123279

(56) References cited:
- EP-A1- 2 903 334
- US-A1- 2008 240 275
- US-A1- 2013 322 363
- US-A1- 2014 241 234
- ZTE: "Considerations on Channel Raster for NB-IoT", 3GPP DRAFT; R1-160051 CHANNEL RASTER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 11 January 2016 (2016-01-11), XP051064635, Retrieved from the Internet: URL:http://www.3gpp.org/ftp/tsg_ran/WG1_RL 1/TSGR1_AH/LTE_NB-IoT_1601/Docs/ [retrieved on 2016-01-11]
- HUAWEI ET AL: "Analysis of Channel Raster Impact on NB-IoT", 3GPP DRAFT; R1-156924, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051039952, Retrieved from the Internet: URL:http://www.3gpp.org/ftp/Meetings_3GPP_ SYNC/RAN1/Docs/ [retrieved on 2015-11-15]
- HUAWEI ET AL: "Synchronization signal design", 3GPP DRAFT; R1-160020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 12 January 2016 (2016-01-12), XP051064659, Retrieved from the Internet: URL:http://www.3gpp.org/ftp/tsg_ran/WG1_RL 1/TSGR1_AH/LTE_NB-IoT_1601/Docs/ [retrieved on 2016-01-12]
- CHANDRA S. BONTU ET AL.: 'Wireless Wide-Area Networks for Internet of Things: An Air Interface Protocol for IoT and a Simultaneous Access Channel for Uplink IoT Communication' IEEE VEHICULAR TECHNOLOGY MAGAZINE vol. 9, no. 1, March 2014, pages 54 - 63, XP011541825

## Description

### PRIORITY CLAIM

This application claims priority to United States Provisional Patent Application Serial No. 62/279,367, filed January 15, 2016.

### TECHNICAL FIELD

Embodiments pertain to wireless communications. Some embodiments relate to wireless networks including 3GPP (Third Generation Partnership Project) networks, 3GPP LTE (Long Term Evolution) networks, and 3GPP LTE-A (LTE Advanced) networks, although the scope of the embodiments is not limited in this respect. Some embodiments relate to internet-of-things (IoT) operation, including narrowband IoT (NB IoT) operation. Some embodiments relate to channel raster frequency offsets, including techniques for communication of the offsets.

### BACKGROUND

Base stations and mobile devices operating in a cellular network may exchange data and related control messages. In an example scenario, the network may support operation according to Internet of Things (IoT) protocols or techniques. In some embodiments, mobile devices that support IoT operation may operate in accordance with reduced processing power, memory, size, complexity and/or other factors. Some operations may be challenging, including synchronization, exchanging of data and/or others. Accordingly, there is a general need for methods and systems for performing these *and* other operations as part of loT techniques and/or other techniques.

The following documents are relevant:
3GPP DRAFT; R1-160051, vol. RAN WG1, no. Budapest, HU; 20160118 - 20160120 11 January 2016, XP051064635 contribution by ZTE discusses considerations on channel raster for NB-IoT.
3GPP DRAFT; R1-156924, vol. RAN WG1, no. Anaheim, USA; 20151115 - 20151122 15 November 2015, XP051039952 contribution by HUAWEI ET AL discusses analysis of channel raster impact on NB-IoT.
R1-160020, vol. RAN WG1, no. Budapest, HU; 20160118 - 20160120 12 January 2016, XP051064659 contribution by HUAWEI ET AL discusses synchronization signal design.

### BRIEF DESCRIPTION OF THE DRAWINGS

FIG. 1 is a functional diagram of a 3GPP network in accordance with some embodiments;
FIG. 2 illustrates a block diagram of an example machine in accordance with some embodiments;
FIG. 3 is a block diagram of an Evolved Node-B (eNB) in accordance with some embodiments;
FIG. 4 is a block diagram of a User Equipment (UE) in accordance with some embodiments;
FIG. 5 illustrates the operation of a method of communication in accordance with some embodiments;
FIG. 6 illustrates examples of channel resource configurations in accordance with some embodiments;
FIG. 7 illustrates the operation of another method of communication in accordance with some embodiments; and
FIG. 8 illustrates an example mapping in accordance with some embodiments.

### DETAILED DESCRIPTION

The following description and the drawings sufficiently illustrate specific embodiments to enable those skilled in the art to practice them. The invention is defined by the appended claims.

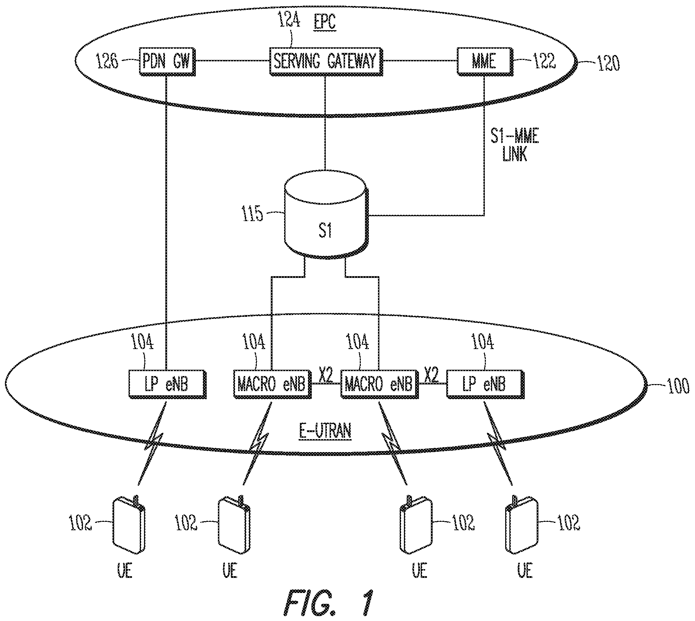

FIG. 1 is a functional diagram of a 3GPP network in accordance with some embodiments. It should be noted that embodiments are not limited to the example 3GPP network shown in FIG. 1, as other networks may be used in some embodiments. As an example, a Fifth Generation (5G) network may be used in some cases. As another example, a wireless local area network (WLAN) may be used in some cases. Embodiments are not limited to these example networks, however, as other networks may be used in some embodiments. In addition, in some embodiments, one or more networks, including these example networks and/or other networks, may be used in combination. As an example, the UE 102 may be configured to communicate with a 3GPP network and with a WLAN in some cases. Such networks may or may not include some or all of the components shown in FIG. 1, and may include additional components and/or alternative components in some cases.

The network may comprise a radio access network (RAN) (e.g., as depicted, the E-UTRAN or evolved universal terrestrial radio access network) 100 and the core network 120 (e.g., shown as an evolved packet core (EPC)) coupled together through an S1 interface 115. For convenience and brevity sake, only a portion of the core network 120, as well as the RAN 100, is shown.

The core network 120 includes a mobility management entity (MME) 122, a serving gateway (serving GW) 124, and packet data network gateway (PDN GW) 126. The RAN 100 includes Evolved Node-B's (eNBs) 104 (which may operate as base stations) for communicating with User Equipment (UE) 102. The eNBs 104 may include macro eNBs and low power (LP) eNBs.

In some embodiments, one or more of the UEs 102 may be configured to operate in accordance with an internet-of-things (IoT) protocol and/or IoT techniques. As an example, narrowband IoT (NB IoT) protocols and/or techniques may be used in some cases. Accordingly, references herein to a UE, IoT UE and/or NB IoT UE as part of descriptions herein are not limiting. For instance, references to one of the UE, IoT UE or NB IoT UE as part of descriptions of various operations and/or techniques may be applicable to the others in some embodiments. In some embodiments, the eNB 104 may be configured to operate in accordance with an internet-of-things (IoT) protocol and/or IoT techniques. In some embodiments, the UE 102 and/or eNB 104 may be configured to operate in accordance with a machine type communication (MTC) protocol and/or MTC techniques.

According to the invention, the eNB 104 transmits synchronization signals such as primary and secondary synchronization signals (PSS and SSS). The synchronization signals are received by one or more UEs 102, which use the synchronization signals to synchronize to the eNB 104 for communication. These embodiments will be described in more detail below.

The MME 122 is similar in function to the control plane of legacy Serving GPRS Support Nodes (SGSN). The MME 122 manages mobility aspects in access such as gateway selection and tracking area list management. The serving GW 124 terminates the interface toward the RAN 100, and routes data packets between the RAN 100 and the core network 120. In addition, it may be a local mobility anchor point for inter-cNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro and micro) terminate the air interface protocol and may be the first point of contact for a UE 102. In some embodiments, an eNB 104 may fulfill various logical functions for the RAN 100 including but not limited to RNC (radio network controller functions) such as radio bearer management, uplink and downlink dynamic radio resource management and data packet scheduling, and mobility management. In accordance with embodiments, UEs 102 may be configured to communicate Orthogonal Frequency Division Multiplexing (OFDM) communication signals with an eNB 104 over a multicarrier communication channel in accordance with an Orthogonal Frequency Division Multiple Access (OFDMA) communication technique. The OFDM signals may comprise a plurality of orthogonal subcarriers.

The S1 interface 115 is the interface that separates the RAN 100 and the EPC 120. It is split into two parts: die S1-U, which carries traffic data between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

In some embodiments, a downlink resource grid may be used for downlink transmissions from an eNB 104 to a UE 102, while uplink transmission from the UE 102 to the eNB 104 may utilize similar techniques. The grid may be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element (RE). There are several different physical downlink channels that are conveyed using such resource blocks. With particular relevanced to this disclosure, two of these physical downlink channels are the physical downlink shared channel and the physical down link control channel.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

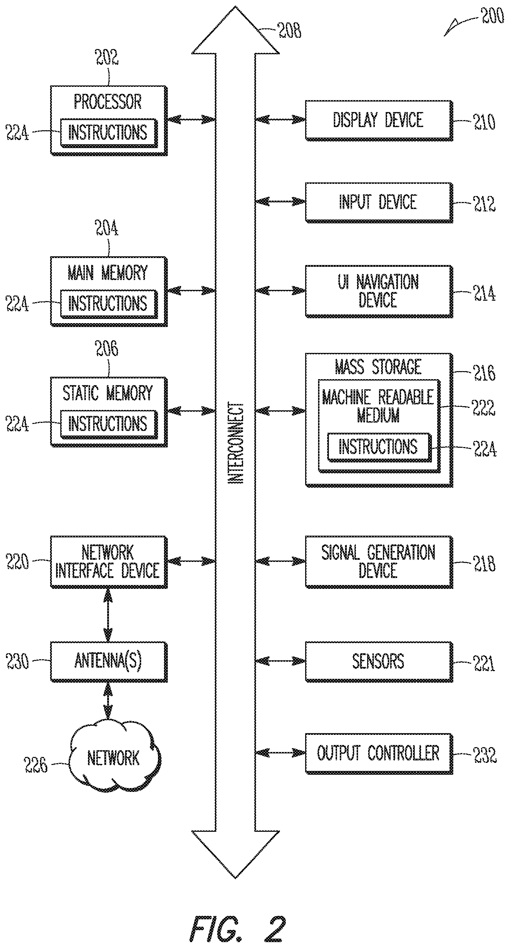

FIG. 2 illustrates a block diagram of an example machine in accordance with some embodiments. The machine 200 is an example machine upon which any one or more of the techniques and/or methodologies discussed herein may be performed. In alternative embodiments, the machine 200 may operate as a standalone device or may be connected (e.g., networked) to other machines. In a networked deployment, the machine 200 may operate in the capacity of a server machine, a client machine, or both in server-client network environments. In an example, the machine 200 may act as a peer machine in peer-to-peer (P2P) (or other distributed) network environment. The machine 200 may be a UE 102, eNB 104, access point (AP), station (STA), mobile device, base station, personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The machine (e.g., computer system) 200 may include a hardware processor 202 (e.g., a central processing unit (CPU), a graphics processing unit (GPU), a hardware processor core, or any combination thereof), a main memory 204 and a static memory 206, some or all of which may communicate with each other via an interlink (e.g., bus) 208. The machine 200 may further include a display unit 210, an alphanumeric input device 212 (e.g., a keyboard), and a user interface (UI) navigation device 214 (e.g., a mouse). In an example, the display unit 210, input device 212 and UI navigation device 214 may be a touch screen display. The machine 200 may additionally include a storage device (e.g., drive unit) 216, a signal generation device 218 (e.g., a speaker), a network interface device 220, and one or more sensors 221, such as a global positioning system (GPS) sensor, compass, accelerometer, or other sensor. The machine 200 may include an output controller 228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 216 may include a machine readable medium 222 on which is stored one or more sets of data structures or instructions 224 (e.g., software) embodying or utilized by any one or more of the techniques or functions described herein. The instructions 224 may also reside, completely or at least partially, within the main memory 204, within static memory 206, or within the hardware processor 202 during execution thereof by the machine 200. In an example, one or any combination of the hardware processor 202, the main memory 204, the static memory 206, or the storage device 216 may constitute machine readable media. In some embodiments, the machine readable medium may be or may include a non-transitory computer-readable storage medium.

While the machine readable medium 222 is illustrated as a single medium, the term "machine readable medium" may include a single medium or multiple media (e.g., a centralized or distributed database, and/or associated caches and servers) configured to store the one or more instructions 224. The term "machine readable medium" may include any medium that is capable of storing, encoding, or carrying instructions for execution by the machine 200 and that cause the machine 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 224 may further be transmitted or received over a communications network 226 using a transmission medium via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 220 may include one or more physical jacks (e.g., Ethernet, coaxial, or phone jacks) or one or more antennas to connect to the communications network 226. In an example, the network interface device 220 may include a plurality of antennas to wirelessly communicate using at least one of single-input multiple-output (SIMO), multiple-input multiple-output (MIMO), or multiple-input single-output (MISO) techniques. In some examples, the network interface device 220 may wirelessly communicate using Multiple User MIMO techniques. The term "transmission medium" shall be taken to include any intangible medium that is capable of storing, encoding or carrying instructions for execution by the machine 200, and includes digital or analog communications signals or other intangible medium to facilitate communication of such software.

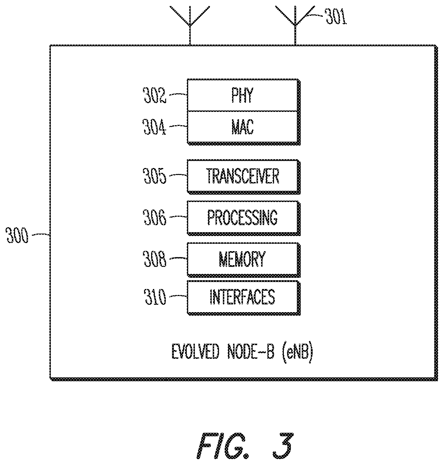

FIG. 3 is a block diagram of an Evolved Node-B (eNB) in accordance with some embodiments. It should be noted that in some embodiments, the eNB 300 may be a stationary non-mobile device. The eNB 300 may be suitable for use as an eNB 104 as depicted in FIG. 1. The eNB 300 may include physical layer circuitry 302 and a transceiver 305, one or both of which may enable transmission and reception of signals to and from the UE 200, other eNBs, other UEs or other devices using one or more antennas 301. As an example, the physical layer circuitry 302 may perform various encoding and decoding functions that may include formation of baseband signals for transmission and decoding of received signals. As another example, the transceiver 305 may perform various transmission and reception functions such as conversion of signals between a baseband range and a Radio Frequency (RF) range. Accordingly, the physical layer circuitry 302 and the transceiver 305 may be separate components or may be part of a combined component. In addition, some of the described functionality related to transmission and reception of signals may be performed by a combination that may include one, any or all of the physical layer circuitry 302, the transceiver 305, and other components or layers. The eNB 300 may also include medium access control layer (MAC) circuitry 304 for controlling access to the wireless medium. The eNB 300 may also include processing circuitry 306 and memory 308 arranged to perform the operations described herein. The eNB 300 may also include one or more interfaces 310, which may enable communication with other components, including other eNBs 104 (FIG. 1), components in die EPC 120 (FIG. 1) or other network components. In addition, the interfaces 310 may enable communication with other components that may not be shown in FIG. 1, including components external to the network. The interfaces 310 may be wired or wireless or a combination thereof. It should be noted that in some embodiments, an eNB or other base station may include some or all of the components shown in either FIG. 2 or FIG. 3 or both.

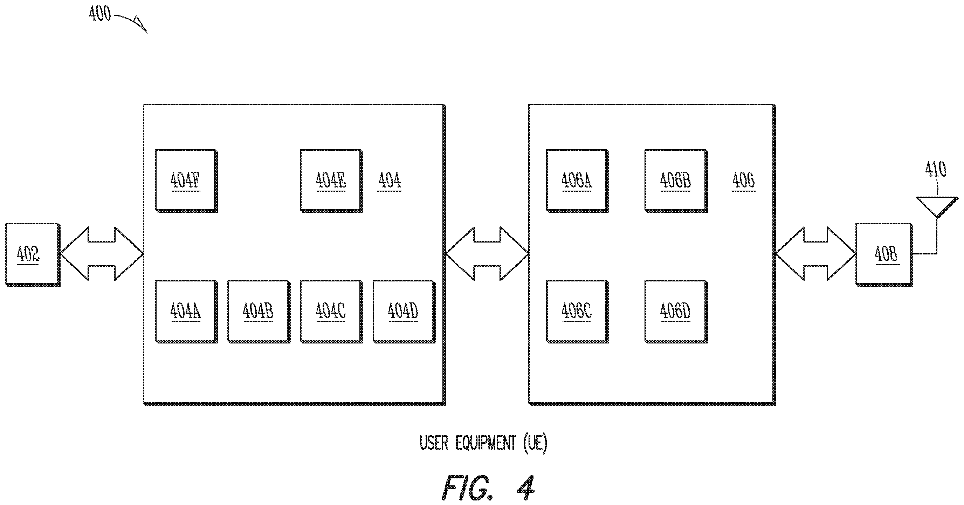

FIG. 4 is a block diagram of a User Equipment (UE) in accordance with some embodiments. The UE 400 may be suitable for use as a UE 102 as depicted in FIG. 1. In some embodiments, the UE 400 may include application circuitry 402, baseband circuitry 404, Radio Frequency (RF) circuitry 406, front-end module (FEM) circuitry 408 and one or more antennas 410, coupled together at least as shown. In some embodiments, other circuitry or arrangements may include one or more elements and/or components of the application circuitry 402, the baseband circuitry 404, the RF circuitry 406 and/or the FEM circuitry 408, and may also include other elements and/or components in some cases. As an example, "processing circuitry" may include one or more elements and/or components, some or all of which may be included in the application circuitry 402 and/or the baseband circuitry 404. As another example, a "transceiver" and/or "transceiver circuitry" may include one or more elements and/or components, some or all of which may be included in the RF circuitry 406 and/or the FEM circuitry 408. These examples are not limiting, however, as the processing circuitry, transceiver and/or the transceiver circuitry may also include other elements and/or components in some cases. It should be noted that in some embodiments, a UE or other mobile device may include some or all of the components shown in either FIG. 2 or FIG. 4 or both.

The application circuitry 402 may include one or more application processors. For example, the application circuitry 402 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 404 may include circuitry such as, but not limited to, one or more single-core or multi-core processors. The baseband circuitry 404 may include one or more baseband processors and/or control logic to process baseband signals received from a receive signal path of the RF circuitry 406 and to generate baseband signals for a transmit signal path of the RF circuitry 406. Baseband processing circuitry 404 may interface with the application circuitry 402 for generation and processing of the baseband signals and for controlling operations of the RF circuitry 406. For example, in some embodiments, the baseband circuitry 404 may include a second generation (2G) baseband processor 404a, third generation (3G) baseband processor 404b, fourth generation (4G) baseband processor 404c, and/or other baseband processor(s) 404d for other existing generations, generations in development or to be developed in the future (e.g., fifth generation (5G), 6G, etc.). The baseband circuitry 404 (e.g., one or more of baseband processors 404a-d) may handle various radio control functions that enable communication with one or more radio networks via the RF circuitry 406. The radio control functions may include, but are not limited to, signal modulation/demodulation, encoding/decoding, radio frequency shifting, etc. In some embodiments, modulation/demodulation circuitry of the baseband circuitry 404 may include Fast-Fourier Transform (FFT), precoding, and/or constellation mapping/demapping functionality. In some embodiments, encoding/decoding circuitry of the baseband circuitry 404 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 404 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 404e of the baseband circuitry 404 may be configured to run elements of the protocol stack for signaling of the PHY, MAC, RLC, PDCP and/or RRC layers. In some embodiments, the baseband circuitry may include one or more audio digital signal processor(s) (DSP) 404f. The audio DSP(s) 404f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 404 and the application circuitry 402 may be implemented together such as, for example, on a system on a chip (SOC).

In some embodiments, the baseband circuitry 404 may provide for communication compatible with one or more radio technologies. For example, in some embodiments, the baseband circuitry 404 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 404 is configured to support radio communications of more than one wireless protocol may be referred to as multi-mode baseband circuitry.

RF circuitry 406 may enable communication with wireless networks using modulated electromagnetic radiation through a non-solid medium. In various embodiments, the RF circuitry 406 may include switches, filters, amplifiers, etc. to facilitate the communication with the wireless network. RF circuitry 406 may include a receive signal path which may include circuitry to down-convert RF signals received from the FEM circuitry 408 and provide baseband signals to the baseband circuitry 404. RF circuitry 406 may also include a transmit signal path which may include circuitry to up-convert baseband signals provided by the baseband circuitry 404 and provide RF output signals to the FEM circuitry 408 for transmission.

In some embodiments, the RF circuitry 406 may include a receive signal path and a transmit signal path. The receive signal path of the RF circuitry 406 may include mixer circuitry 406a, amplifier circuitry 406b and filter circuitry 406c. The transmit signal path of the RF circuitry 406 may include filter circuitry 406c and mixer circuitry 406a. RF circuitry 406 may also include synthesizer circuitry 406d for synthesizing a frequency for use by the mixer circuitry 406a of the receive signal path and the transmit signal path. In some embodiments, the mixer circuitry 406a of the receive signal path may be configured to down-convert RF signals received from the FEM circuitry 408 based on the synthesized frequency provided by synthesizer circuitry 406d. The amplifier circuitry 406b may be configured to amplify the down-converted signals and the filter circuitry 406c may be a low-pass filter (LPF) or band-pass filter (BPF) configured to remove unwanted signals from the down-converted signals to generate output baseband signals. Output baseband signals may be provided to the baseband circuitry 404 for further processing. In some embodiments, the output baseband signals may be zero-frequency baseband signals, although this is not a requirement. In some embodiments, mixer circuitry 406a of the receive signal path may comprise passive mixers, although the scope of the embodiments is not limited in this respect. In some embodiments, the mixer circuitry 406a of the transmit signal path may be configured to up-convert input baseband signals based on the synthesized frequency provided by the synthesizer circuitry 406d to generate RF output signals for the FEM circuitry 408. The baseband signals may be provided by the baseband circuitry 404 and may be filtered by filter circuitry 406c. The filter circuitry 406c may include a low-pass filter (LPF), although the scope of the embodiments is not limited in this respect.

In some embodiments, the mixer circuitry 406a of the receive signal path and the mixer circuitry 406a of the transmit signal path may include two or more mixers and may be arranged for quadrature downconversion and/or upconversion respectively. In some embodiments, the mixer circuitry 406a of the receive signal path and the mixer circuitry 406a of the transmit signal path may include two or more mixers and may be arranged for image rejection (e.g., Hartley image rejection). In some embodiments, the mixer circuitry 406a of the receive signal path and the mixer circuitry 406a may be arranged for direct downconversion and/or direct upconversion, respectively. In some embodiments, the mixer circuitry 406a of the receive signal path and the mixer circuitry 406a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 406 may include analog-to-digital converter (ADC) and digital-to-analog converter (DAC) circuitry and the baseband circuitry 404 may include a digital baseband interface to communicate with the RF circuitry 406. In some dual-mode embodiments, a separate radio IC circuitry may be provided for processing signals for each spectrum, although the scope of the embodiments is not limited in this respect.

In some embodiments, the synthesizer circuitry 406d may be a fractional-N synthesizer or a fractional N/N+1 synthesizer, although the scope of the embodiments is not limited in this respect as other types of frequency synthesizers may be suitable. For example, synthesizer circuitry 406d may be a delta-sigma synthesizer, a frequency multiplier, or a synthesizer comprising a phase-locked loop with a frequency divider. The synthesizer circuitry 406d may be configured to synthesize an output frequency for use by the mixer circuitry 406a of the RF circuitry 406 based on a frequency input and a divider control input. In some embodiments, the synthesizer circuitry 406d may be a fractional N/N+1 synthesizer. In some embodiments, frequency input may be provided by a voltage controlled oscillator (VCO), although that is not a requirement. Divider control input may be provided by either the baseband circuitry 404 or the applications processor 402 depending on the desired output frequency. In some embodiments, a divider control input (e.g., N) may be determined from a look-up table based on a channel indicated by the applications processor 402.

Synthesizer circuitry 406d of the RF circuitry 406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 406d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at die carrier frequency with multiple different phases with respect to each other. In some embodiments, the output frequency may be a LO frequency (f_{LO}). In some embodiments, the RF circuitry 406 may include an IQ/polar converter.

FEM circuitry 408 may include a receive signal path which may include circuitry configured to operate on RF signals received from one or more antennas 410, amplify the received signals and provide the amplified versions of the received signals to the RF circuitry 406 for further processing. FEM circuitry 408 may also include a transmit signal path which may include circuitry configured to amplify signals for transmission provided by the RF circuitry 406 for transmission by one or more of the one or more antennas 410.

In some embodiments, the FEM circuitry 408 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 406). The transmit signal path of the FEM circuitry 408 may include a power amplifier (PA) to amplify input RF signals (e.g., provided by RF circuitry 406), and one or more filters to generate RF signals for subsequent transmission (e.g., by one or more of the one or more antennas 410. In some embodiments, the UE 400 may include additional elements such as, for example, memory/storage, display, camera, sensor, and/or input/output (I/O) interface.

The antennas 230, 301, 410 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 230, 301, 410 may be effectively separated to take advantage of spatial diversity and the different channel characteristics that may result.

In some embodiments, the UE 400 and/or the eNB 300 may be a mobile device and may be a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a wearable device such as a medical device (e.g., a heart rate monitor, a blood pressure monitor, etc.), or other device that may receive and/or transmit information wirelessly. In some embodiments, the UE 400 or eNB 300 may be configured to operate in accordance with 3GPP standards, although the scope of the embodiments is not limited in this respect. Mobile devices or other devices in some embodiments may be configured to operate according to other protocols or standards, including IEEE 802.11 or other IEEE standards. In some embodiments, the UE 400, eNB 300 or other device may include one or more of a keyboard, a display, a non-volatile memory port, multiple antennas, a graphics processor, an application processor, speakers, and other mobile device elements. The display may be an LCD screen including a touch screen.

Although the UE 400 and the eNB 300 are each illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

It should be noted that in some embodiments, an apparatus used by the UE 400 and/or eNB 300 and/or machine 200 may include various components of the UE 400 and/or the eNB 300 and/or the machine 200 as shown in FIGs. 2-4. Accordingly, techniques and operations described herein that refer to die UE 400 (or 102) may be applicable to an apparatus for a UE. In addition, techniques and operations described herein that refer to the eNB 300 (or 104) may be applicable to an apparatus for an eNB.

In accordance with some embodiments, die eNB 104 may transmit a narrowband primary synchronization signal (NPSS) in an NB-IoT PRB. A channel raster frequency offset of the NB-IoT PRB may be based on a frequency difference between a center frequency of the NB-IoT PRB and a nearest multiple of a predetermined network raster frequency. As an example, a root index of a sequence generator used to generate the NPSS may indicate the channel raster frequency offset. As another example, the eNB 104 may transmit a control message that indicates the channel raster frequency offset. The UE 102 may receive the control message and the NPSS. These embodiments are described in more detail below.

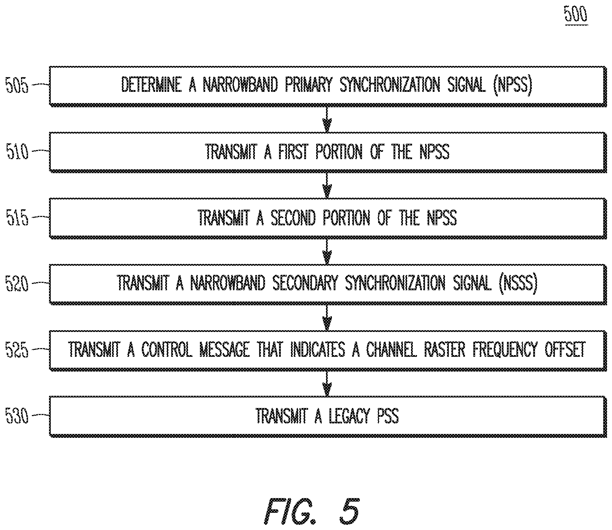

FIG. 5 illustrates the operation of a method of communication in accordance with some embodiments. It is important to note that embodiments of the method 500 may include additional or even fewer operations or processes in comparison to what is illustrated in FIG. 5. In addition, embodiments of the method 500 are not necessarily limited to the chronological order that is shown in FIG. 5. In describing the method 500, reference may be made to FIGs. 1-4 and 6-8, although it is understood that the method 500 may be practiced with any other suitable systems, interfaces and components.

In addition, while the method 500 and other methods described herein may refer to eNBs 104 or UEs 102 operating in accordance with 3GPP standards, 5G standards and/or other standards, embodiments of those methods are not limited to just those eNBs 104 or UEs 102 and may also be practiced on other devices, such as a Wi-Fi access point (AP) or user station (STA). In addition, the method 500 and other methods described herein may be practiced by wireless devices configured to operate in other suitable types of wireless communication systems, including systems configured to operate according to various IEEE standards such as IEEE 802.11. The method 500 may also refer to an apparatus for a UE 102 and/or eNB 104 and/or other device described above.

It should also be noted that embodiments are not limited by references herein (such as in descriptions of the methods 500 and 700 and/or other descriptions herein) to transmission, reception and/or exchanging of elements such as frames, messages, requests, indicators, signals or other elements. In some embodiments, such an element may be generated, encoded or otherwise processed by processing circuitry (such as by a baseband processor included in the processing circuitry) for transmission. The transmission may be performed by a transceiver or other component, in some cases. In some embodiments, such an element may be decoded, detected or otherwise processed by the processing circuitry' (such as by the baseband processor). The element may be received by a transceiver or other component, in some cases. In some embodiments, the processing circuitry' and the transceiver may be included in a same apparatus. The scope of embodiments is not limited in this respect, however, as the transceiver may be separate from the apparatus that comprises the processing circuitry, in some embodiments.

In some embodiments, a cell search procedure and time and frequency synchronization between the network and NB-IoT devices in narrowband internet of things (NB IoT) systems is performed via transmission of one or more primary synchronization signal (PSS) and/or secondary synchronization signal (SSS) by a base station. As a non-limiting
example, the PSS and/or SSS may be transmitted by NB-IoT base stations. In some embodiments, techniques may be used to enable a reduction in device complexity for the NB IoT devices.

In some embodiments, a channel raster frequency offset for a narrowband internet of things (NB-IoT) physical resource block (PRB) is used by the eNB 104 for transmission of signals, such as synchronization signals, for the NB-IoT communication. In some embodiments, the channel raster frequency offset is based on a frequency difference between a center frequency of the NB-IoT PRB and a nearest multiple of a predetermined network raster frequency. As an example, the network raster frequency may be a predetermined value, such as 100 kHz or other suitable value. In some cases, center frequencies, carrier frequencies and/or other operational frequencies of a system may be allocated to and/or restricted to multiples of the network raster frequency. Accordingly, the NB-IoT PRB occupies channel resources for which a center frequency is not aligned with a multiple of the network raster frequency, in some cases. The channel raster frequency offset may indicate a difference between the center frequency and a nearest multiple of the network raster frequency.

At operation 505, the eNB 104 determines a narrowband primary synchronization signal (NPSS). Any suitable technique may be used to generate the NPSS. As an example, the NPSS may be determined using one or more techniques included in 3GPP LTE standards and/or other standards. As another example, one or more legacy techniques included in such standards may be used. Although embodiments are not limited as such, these example techniques may be performed independently of the channel raster frequency offset, in some embodiments.

In some embodiments, the NPSS may include multiple portions that may be transmitted during different time resources. As an example, which will be described in more detail below, the NPSS may include a first portion based on a first sequence and a second portion based on a second sequence. The first and second portions of the NPSS may be transmitted in different time resources, in some cases.

It should be noted that embodiments are not limited to NPSSs that include multiple portions, however. In some embodiments, the NPSS may not necessarily include multiple portions. Accordingly, some operations described herein, such as transmission of individual portions of the NPSS, reception of individual portions of the NPSS, generation/determination of individual portions of the NPSS and/or others may not necessarily be included in those embodiments. Instead, operations such as transmission of the NPSS, reception of the NPSS, generation/determination of the NPSS and/or others may be included in those embodiments.

In some embodiments, the NPSS may be based on the channel raster frequency offset. Accordingly, the NPSS may convey and/or indicate the channel raster frequency offset implicitly, in some cases. As an example of such, the NPSS may be based on an output of a sequence generator that uses, as input, a root index of a group of candidate root indexes. The candidate root indexes may be mapped, in a predetermined manner or otherwise, to a group of candidate channel raster frequency offsets, in some cases. Accordingly, to convey and/or indicate a particular channel raster frequency offset, the candidate root index that is mapped to that particular channel raster frequency offset may be used as input to the sequence generator. Different NPSSs may therefore be generated in accordance with different candidate channel raster frequency offsets. In some embodiments, multiple outputs of the sequence generator may be used, such as for generation of multiple portions of the NPSS. In some cases, multiple candidate root indexes may be mapped to a single candidate channel raster frequency offset, in some cases. For instance, first and second candidate root indexes mapped to a particular candidate channel raster frequency offset may be used to generate the first and second portions of the NPSS for the particular candidate channel raster frequency offset.

As another example, a group of candidate NPSSs may be predetermined or generated using other techniques. It should be noted that one or more of the candidate NPSSs may include multiple portions, as in the example described above. A particular NPSS of the group of candidate NPSSs may be selected for usage in order to convey and/or indicate a particular channel raster frequency offset. As another example, a group of candidate sequences (such as base sequences) may be predetermined or generated using other techniques, and the NPSS may be based on one or more of the candidate sequences. A particular sequence (or multiple sequences) of the group of candidate sequences may be selected for usage in order to convey and/or indicate the channel raster frequency offset. As another example, a particular NPSS may include multiple portions that may be related. For instance, a first portion of the NPSS may be based on a first candidate sequence and a second portion may be based on a second candidate sequence. The first and second portions of the NPSS may be transmitted in different time resources, in some cases. The first and second portions may be based on the channel raster frequency offset, in some cases. It should be noted that in these examples, the NPSSs and/or other sequences may be generated by the eNB 104, although embodiments are not limited as such. In some embodiments, the NPSSs and/or other sequences may be pre-computed and stored for usage.

As a non-limiting example of a sequence generator that may be used, Zadoff-Chu (ZC) sequences may be generated using ZC root indexes as inputs. In some embodiments, a first NPSS may be based on a first ZC sequence that uses a first ZC root index and a second NPSS may be based on a second ZC sequence that uses a second ZC root index. The first and second ZC root indexes may be mapped to different channel raster frequency offsets, in some cases, and the first and second NPSS may therefore convey and/or indicate the channel raster frequency offset. In some embodiments, a particular NPSS may include multiple portions. For instance, a first portion of the NPSS may be based on a first ZC sequence that uses a first ZC root index and a second portion of the NPSS may be based on a second ZC sequence that uses a second ZC root index. The first and second ZC root indexes may be mapped to a particular channel raster frequency offset. Extending this example, third and fourth ZC root indexes may be mapped to another channel raster frequency offset, and another NPSS may include two portions based on the third and fourth ZC root indexes. These techniques may be extended to any suitable number of NPSSs and/or portions. It should be noted that the ZC sequences may be generated by the eNB 104, in some cases, although embodiments are not limited as such. In some embodiments, the ZC sequences may be pre-computed and stored for usage.

It should be noted that some embodiments of the method 500 may not necessarily include all operations. Accordingly, some embodiments may not necessarily include both of operations 505 and 525 (in which a control message that indicates the channel raster frequency offset is transmitted, as will be described below). As an example, in some embodiments, the NPSS may be determined at operation 505 based on the channel raster frequency offset. Accordingly, the control message of operation 525 (which indicates the offset) may not necessarily be transmitted, in which case the method 500 may exclude operation 525. In some embodiments, a predetermined NPSS may be used. Accordingly, operation 505 may be excluded from some embodiments of the method 500. Some embodiments may include both operations 505 and 525, however.

At operation 510, the eNB 104 may transmit a first portion of the NPSS. At operation 515, the eNB 104 may transmit a second portion of the NPSS. It should be noted that in some embodiments, the NPSS may not necessarily include multiple portions, in which cases operations 510 and 515 may not necessarily be included in the method 500. Accordingly, in such embodiments, an operation in which an NPSS is transmitted may be included.

In some embodiments, the NPSS may be transmitted to enable synchronization of an NB-IoT communication between the eNB 104 and one or more UEs 102. The eNB may be configured to support the NB-IoT communication as an in-band communication in an NB-IoT portion of channel resources, in some embodiments. Accordingly, the eNB 104 may also support a legacy communication with other UEs 102 in a legacy portion of the channel resources concurrently with the NB-IoT communication, in some cases.

It should be noted that embodiments are not limited to in-band communication, however. In some embodiments, a stand-alone NB-IoT deployment may be used. Accordingly, in some cases, one or more operations described herein for an in-band NB-IoT communication (such as the communication of channel raster frequency offset and/or other operations) may be used as part of a stand-alone NB-IoT communication. In some cases, such operations may be modified for usage in the stand-alone NB-IoT communication, such as usage of a different set of candidate channel raster frequency offsets including no indication of channel raster frequency offsets to NB-IoT devices as the center frequency of the NB-IoT carrier may be aligned with the specified channel raster, e.g., a channel raster of 100 kHz.

in some embodiments, the NPSS (and/or NPSS portions) is transmitted in an NB-IoT PRB (such as the NB-IoT PRB on which the channel raster frequency offset is based) during one or more orthogonal frequency-division multiplexing (OFDM) symbol periods, in some embodiments. As an example, the NB-IoT PRB may be allocated for the transmission of the NPSS during the one or more OFDM symbol periods. In some embodiments, the NB- IoT PRB may be included in a group of one or more candidate NB-IoT PRBs allocated for transmissions of NPSSs during the one or more OFDM symbol periods. Accordingly, a portion of the channel resources of the eNB 104 (the group of one or more candidate NB-IoT PRBs) may be allocated, during the one or more OFDM symbol periods, for transmissions of NPSSs.

It should also be noted that the eNB 104 may transmit multiple NPSSs (and/or portions of NPSSs) during the OFDM symbol period. As an example, a different NPSS may be transmitted in different NB-IoT PRBs of the group of candidate NB-IoT PRBs.

In some examples, center frequencies of the candidate NB- IoT PRBs may be restricted to values for which channel raster frequency offsets are less than or equal to a predetermined threshold. In a non-limiting example, the network raster frequency may be 100 kHz and the threshold may be 17.5 kHz or 7.5 kHz, although it is understood that in embodiments the channel raster frequency offset is +/-2.5 kHz or +/-7.5 kHz.

In some embodiments, the candidate NB-IoT PRBs may be of a predetermined NB-IoT PRB bandwidth. Center frequencies of the candidate NB-IoT PRBs may be further restricted to values that are based on summations of a predetermined frequency offset from a center frequency of the channel resources and multiples of the NB-IoT PRB bandwidth. The previous example will be extended using a NB-IoT PRB bandwidth of 180 kHz in order to align
with the LTE PRBs, although it is understood that embodiments are not limited to this example bandwidth.

For in-band mode of operation, when the LTE channel resources are configured in an even system bandwidth configuration, the center frequencies of the candidate NB-IoT PRBs may be further restricted to values based on a summation of 97.5 kHz and a multiple of 180 kHz. Of these, the group of candidate NB-IoT PRBs may be further restricted to those values that satisfy a maximum channel raster offset (i.e., such that the frequency difference between the center of the NB-IoT PRB and the 100 kHz channel raster is no more than a specified threshold, e.g., 7.5 kHz).

For in-band mode of operation, when the LTE channel resources are configured in an odd system bandwidth configuration, the center frequencies of the candidate NB-IoT PRBs may be further restricted to values based on a summation of 187.5 kHz and a multiple of 180 kHz. Of these, the group of candidate NB-IoT PRBs may be further restricted to those values that satisfy a maximum channel raster offset (i.e., such that the frequency difference between the center of the NB-IoT PRB and the 100 kHz channel raster is no more than a specified threshold, e.g., 7.5 kHz).

The previous examples may be extended to include negative frequency ranges (with respect to the carrier frequency and/or DC sub-carrier) in some cases, and may also include operations such as absolute values. However, the concepts of restriction described by these examples may be applicable to other variations, in some cases.

It should be noted that the center frequencies of the candidate NB-IoT PRBs may be restricted to enable a reduction in frequency ranges to be searched by the UEs 102 as part of a cell search that includes a detection of the NPSS. As will be described below, the UE 102 may use the channel raster frequency offset to determine a frequency offset at the UE 102 receiver due to imprecise local oscillator at the UE receiver or impact of temperate variations at the UE receiver. It may be beneficial to reduce a number of frequency ranges to be searched as part of the cell search, in some cases. For instance, processing power, memory, battery life, capabilities and/or other factors of NB-IoT UEs 102 may be reduced in comparison to other mobile devices in order to reduce and/or minimize cost, device complexity, power consumption or other performance metrics.

In some embodiments, the first portion of the NPSS may be transmitted in a first set of one or more OFDM symbol periods. In some embodiments, the second portion of the NPSS may be transmitted in a second set of one or more OFDM symbol periods. For instance, the first and second sets of OFDM symbol periods may be separated in time by a predetermined number of OFDM symbol periods. Such a separation may be part of a 3GPP standard and/or other standard, in some cases, although embodiments are not limited as such. It should be noted that the second portion of the NPSS may be transmitted in the same NB-IoT PRB as the first portion of the NPSS in some embodiments, although the scope of embodiments is not limited in this respect.

The second portion of the NPSS may be related to the first portion of the NPSS, in some embodiments. As an example, the first portion of the NPSS may be repeated as the second portion. As another example, when the first portion of the NPSS is based on a first ZC sequence generated by a first ZC root index, the second portion of the NPSS may be based on a second ZC sequence generated by a second ZC root index. In some cases, the second ZC root index may be a conjugate of the first ZC root index, although embodiments are not limited as such.

At operation 52.0, the eNB 104 may transmit a narrowband secondary synchronization signal (NSSS). In some embodiments, the NSSS may be transmitted in one of the candidate NB-IoT PRBs during a different OFDM symbol period as those used for transmissions of NPSSs.

At operation 525 of the method 500, the eNB 104 may transmit a control message that indicates a channel raster frequency offset for an NB-IoT PRB. In some embodiments, the channel raster frequency offset may be and/or may be based on a frequency difference between a center frequency of the NB-IoT PRB and a nearest multiple of a predetermined network raster frequency. As an example, die network raster frequency may be a predetermined value, such as 100 kHz or other suitable value. In some cases, center frequencies, carrier frequencies and/or other operational frequencies of a system may be allocated to and/or restricted to multiples of the network raster frequency. Accordingly, the NB-IoT PRB may occupy channel resources for which a center frequency is not aligned with a multiple of the network raster frequency, in some cases. The channel raster frequency offset may indicate a difference between the center frequency and a nearest multiple of the network raster frequency.

The control message includes a narrowband master information block (N- MIB) (which may be transmitted on a narrowband physical broadcast channel (NPBCH) in some cases). Such control messages may be included in one or more 3GPP LTE standards and/or other standards, in some embodiments, although the scope of embodiments is not limited in this respect. In some embodiments, other control messages that may be included in other standards may be used. In addition, control messages that may not necessarily be part of a standard may also be used, in some embodiments.

At operation 530, the eNB 104 may transmit one or more legacy PSSs in a legacy PRB of the legacy channel resources during an OFDM symbol period. In some embodiments, the OFDM symbol period may be the same OFDM symbol period used for the transmission of the NPSSs, although the scope of embodiments is not limited in this respect. It should be noted that operation 530 may not necessarily be included in some embodiments. As an example, operation 530 may be excluded from some embodiments in which stand-alone NB-IoT operation is used. It should also be noted that embodiments are not limited to chronological order to operations of the method 500.

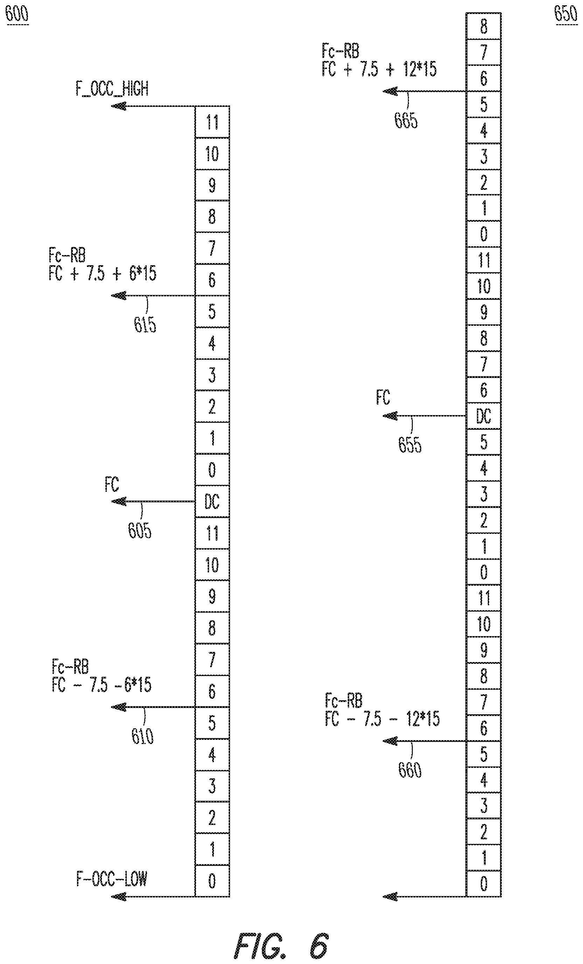

FIG. 6 illustrates examples of channel resource configurations in accordance with some embodiments. It should be noted that the examples shown in FIG. 6 may illustrate some or all of the concepts and techniques described herein in some cases, but embodiments are not limited by the examples. For instance, embodiments are not limited by the name, number, type, size, ordering, arrangement and/or other aspects of the channel resources, resource elements (REs), resource blocks (RBs) and other elements as shown in FIG, 6. Although some of the elements shown in the examples of FIG, 6 may be
included in a 3GPP LTE standard and/or other standard, embodiments are not limited to usage of such elements that are included in standards.

In the examples of even bandwidth configuration 600 and odd bandwidth configuration 650, REs may be of 15 kHz bandwidth (although embodiments are not limited by this number). In the even bandwidth configuration 600, the frequencies 610, 615 may be candidate NB-IoT PRB center frequencies at 97.5 kHz and -97.5 kHz. As an example, the candidate NB-IoT PRB center frequencies for the even bandwidth configuration 600 may be of a form 97.5 + 180*m, in which "m" is a non-negative integer. As another example, the candidate NB-IoT PRB center frequencies for the even bandwidth configuration 600 may be of a form (+/-)(97.5 + 180*m), in which "m" is anonnegative integer.

In the odd bandwidth configuration 650, the frequencies 660, 665 may be candidate NB-IoT PRB center frequencies at 187.5 kHz and -187.5 kHz. As an example, the candidate NB-IoT PRB center frequencies for the odd bandwidth configuration 650 may be of a form 187.5 + 180*m, in which "m" is a non-negative integer. As another example, the candidate NB-IoT PRB center frequencies for the odd bandwidth configuration 650 may be of a form (+/-)(187.5 + 180*m), in which "m" is anon-negative integer.

In some embodiments, NB-IoT may use a channel raster similar to LTE (such as 100 kHz), for example in stand-alone mode of operation. In some cases, there may be a misalignment between the center of the NB-IoT PRB and a closest channel raster. As an example, for an in-band NB-IoT deployment, for the 100 kHz raster, the absolute value of the offset for all PRB-center locations with respect to each raster location is 2.5 kHz for an even bandwidth configuration. The absolute value of the offset for all PRB-center locations with respect to each raster location is 7.5 kHz for an odd bandwidth configuration. For the even bandwidth configuration, the PRB centers may be of a form abs(97.5 + 180*k) for "k" a non-negative integer. For the odd bandwidth configuration, the PRB centers may be of a form abs(187.5 + 180*k) for "k" a non-negative integer. Accordingly, there may be a non-zero
raster frequency offset that may be accounted for as part of one or more operations of a cell search, in some cases.

It should be noted that such raster offsets may not necessarily be applicable to stand-alone NB-IoT deployment in which the 100 kHz raster may coincide with centers of the NB-IoT PRBs. In addition, in case of guard band deployment of NB-IoT, the allocation of the NB-IoT channel resources may result in different offset. However, in these and other scenarios, it may be possible that complete alignment between possible NB-IoT center frequencies and a legacy LTE channel raster may not always occur.

It should be noted that allocation of NB-IoT PRBs in accordance with an increased number of permitted channel raster frequency offset values may increase a number of NB-IoT PRBs that may be allocated. However, larger search windows to be used by the UE 102 may also result. As an example, a 15 kHz sub-carrier spacing and a frequency offset (at the UE 102 due to hardware imperfections) of 18 kHz and a raster offset of 7.5 kHz, the UE 102 may perform five hypothesis tests to detect frequency offsets in a range of (-25.5, 25.5) kHz. Accordingly, all PRBs may not necessarily be allocated for NB-IoT, in some cases.

In some embodiments, NB-IoT PRB may be restricted to candidate PRBs for which the raster offset is less than a threshold. In some embodiments, raster offsets may be restricted to positive values. Such a restriction to PRBs for which the raster offset is less than a threshold may be applicable to NB-IoT PRBs carrying at least the NPSS / NSSS / N-PBCH, in some cases. Such an NB-IoT PRB carrying at least the NPSS/NSSS/NPBCH is called an anchor PRB or anchor carrier. For NB-IoT systems operating with multiple carriers including at least one anchor PRB, the additional NB-IoT carriers that do not carry NPSS/NSSS/NPBCH may not necessarily carry these channels, and there may not necessarily be restriction on allocation of these additional NB-IoT PRBs.

In some embodiments, the NPSS may be used for frequency offset estimation. However, the offset may be based on both a local oscillator offset (at the eNB 104) and the channel raster frequency offset, in some cases. Accordingly, the channel raster frequency offset may be communicated the UE 102 to enable the UE 102 to determine which "absolute" frequency to camp on. In an example, a) f_c may be an absolute value of a carrier frequency of the NB-IoT signal, b) f_LO may be a frequency offset resulting from a local oscillator offset, Doppler shift and/or other factors, c) f_raster may be a raster offset relative to f c. The UE 102 may detect and assume that the incoming signal is at a carrier frequency of f_rx = f_c + f_LO + f_raster. When the UE 102 attempts to receive the signal assuming a carrier frequency f_c, the UE 102 may perform time and frequency synchronization and may over-compensate the frequency offset f_est because it may include both f_raster and f_LO. Accordingly, the UE 102 may have knowledge of f_raster (such as in techniques and/or operations described herein) and may determine f_LO accordingly (based on a difference and/or subtraction). The UE 102 may camp on a correct carrier frequency f_c = f_rx - f_est - f_raster.

In some embodiments, the channel raster mismatch signaling may indicate exact carrier frequency information. In some embodiments, the channel raster mismatch may be indicated by a frequency offset relative to a closest carrier frequency, as per EUTRA absolute radio-frequency channel number (EARFCN). In some embodiments, the channel raster frequency offset may be signaled on any channel before uplink EARFCN is indicated via a broadcast message to the UE 102. In some embodiments, the usage of different root indexes to encode information regarding different channel raster frequency offsets may be used. For instance, PSS1 and PSS2 (the first and second portions of the NPSS described in method 500, for example) may use root indexes of p1 and (N_PSS - p1) for a first channel raster frequency and may use root indexes of p2 and (N_PSS - p2) for a second channel raster frequency. Additional combinations may be used to indicate additional channel raster frequencies, in some cases. The roots p1, p2 may be selected based on a cross-correlation criterion of resulting ZC sequences, in some cases. For instance, raster offsets of 0, 2.5, and 7.5 kHz may use root indexes of 1, 13, and 27. Embodiments are not limited by these example numbers.

In some embodiments, the offset information may be included in the NSSS using different scrambling or root indexes or a combination or in the NPBCH. For instance, the channel raster offset may be indicated in the N-MIB sent on the NPBCH, in some cases. In some embodiments, the channel raster offset may be indicated on any NB system information blocks (NB-SIB) or system information message for the UE 102. For instance, the NB-SIB 1 may be used in some cases. In some embodiments, the channel raster offset may be indicated to the UE 102 on a common RRC channel. In some embodiments, the channel raster offset may be indicated to the UE 102 via a dedicated RRC message.

In some examples, the channel raster offset may be signaled on a channel carrying uplink EARFCN information to the UE 102. For instance, the offset may be indicated in a NB-SIB2 message. In some embodiments, k bits of a message (such as those described above and/or others) may be allocated to cany channel raster information. For instance, when values are restricted to one of -2.5 kHz, 0, and 2.5 kHz (three possible values), two bits may be used.

In some examples, the UE 102 may first determine a center frequency and then determine the EARFCN of the legacy LTE system by detecting the legacy LTE PSS. From this information, the UE 102 may extrapolate the center frequencies of all RBs in the configured band and may reduce the search space for the NPSS by reducing a number of potential channel raster points and by optimizing a number of hypothesis tests.

In some embodiments, the NSSS may include two sequences SSS1 and SSS2 generated by ZC sequence root indexes of ul and u2, which may be used to indicate a physical cell ID (PCID). As each of the sequences SSS1 and SSS2 may provide different independent information, it may be necessary, in some cases, that both sequences be correctly received. For a cell edge UE 102, which may receive synchronization signals from multiple neighboring cells, the UE 102 may detect root indexes corresponding to SSS 1 from a first eNB 104 and SSS2 from a second eNB 104. Accordingly, incorrect cell ID detection may result.

This issue may be mitigated, in some cases, by the following techniques. SSS 1 may be scrambled by a sequence that is uniquely mapped to SSS2. For instance, SSSI(n) = W_u2(n) * exp(-j*pi*ul*n*(n+l) / NumSSS). SSS2 may be scrambled by a sequence that is uniquely mapped to SSS 1. For instance, SSS2(n) = W ul(n) * exp(- j*pi*ul*n*(n+l) / NumSSS). The
sequences W_ul(n) and W_u2(n) may represent scrambling sequences. The scrambling may help mitigate the issue described above by creation of dependence between SSS1 and SSS2.

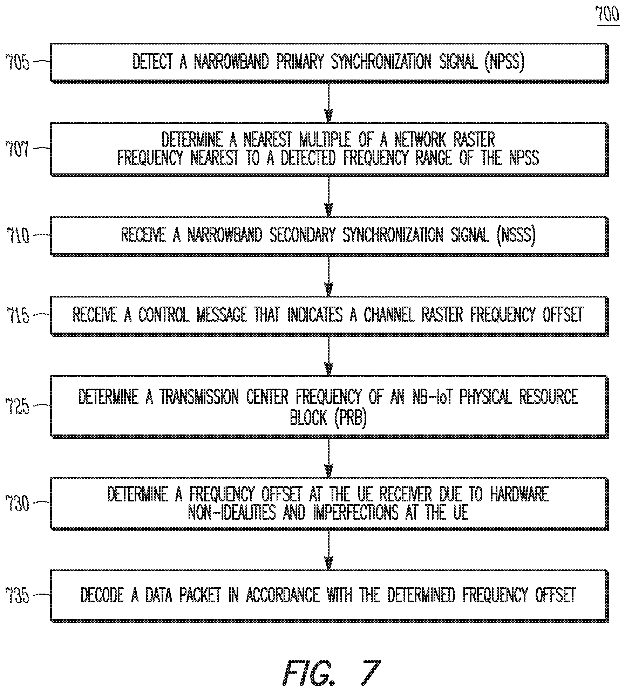

FIG. 7 illustrates the operation of another method of communication in accordance with some embodiments. As mentioned previously regarding the method 500, embodiments of the method 700 may include additional or even fewer operations or processes in comparison to what is illustrated in FIG. 7 and embodiments of die method 700 are not necessarily limited to the chronological order that is shown in FIG. 7. In describing the method 700, reference may be made to FIGs. 1-6 and 8, although it is understood that the method 700 may be practiced with any other suitable systems, interfaces and components. In addition, embodiments of the method 700 may be applicable to UEs 102, eNBs 104, APs, STAs and/or other wireless or mobile devices. The method 700 may also be applicable to an apparatus for a UE 102, eNB 104 and/or other device described above.

It should be noted that die method 700 may be practiced by a UE 102 and may include exchanging of elements, such as frames, signals, messages and/or other elements, with an eNB 104. Similarly, the method 500 may be practiced at an eNB 104 and may include exchanging of such elements with a UE 102. In some cases, operations and techniques described as part of the method 500 may be relevant to the method 700. In addition, embodiments of the method 700 may include operations performed at the UE. 102 that are reciprocal to or similar to other operations described herein performed at the eNB 104. For instance, an operation of the method 700 may include reception of a message from the eNB 104 by the UE 102 while an operation of the method 500 may include transmission of the same message or similar message by the eNB 104.

In addition, previous discussion of various techniques and concepts may be applicable to the method 700 in some cases, including NB-IoT, NB-IoT PRBs, NPSSs, NSSSs, multiple portions of the NPSSs, legacy PRBs, legacy PSSs, legacy SSSs, channel raster frequency offsets, network raster frequencies, control messages that include channel raster frequency offset information, implicit indication of channel raster frequency offset information (such as in the NPSS, NSSS and/or others), root indexes, sequence generators, ZC sequences, ZC root indexes even bandwidth and odd bandwidth configurations, allocation of channel resources for NB-IoT operation and/or legacy operation, OFDM symbol periods and/or others. In addition, the examples shown in FIG. 6 may also be applicable, in some cases, although the scope of embodiments is not limited in this respect.

At operation 705, the UE 102 may attempt to detect an NPSS. In some embodiments, the UE 102, may search for the NPSS based on a worst case raster frequency offset. For instance, a maximum threshold for the channel raster frequency offset may be a value like 7.5 kHz or other suitable value. Such a value may be part of a 3GPP standard and/or other standard, in some cases, although embodiments are not limited to usage of values that are included in standards. The UE 102 may detect the NPSS to enable time and frequency synchronization, in some embodiments.

As described previously, in some embodiments, the NPSS may include multiple portions, although embodiments are not limited to multiple portions. For instance, a first and second portion of the NPSS may be separated in a first set of one or more OFDM symbols and a second set of OFDM symbols, respectively, which may be separated by a predetermined spacing. In some embodiments, the attempt to detect the NPSS is part of a cell search for an NB-IoT communication with the eNB 104. The UE 102 may perform operations such as scanning, sensing, correlation and/or others as part of the attempted detection.

The UE 102 may attempt to detect the NPSS in a group of one or more frequency search windows of channel resources of the eNB 104, in some embodiments. As previously described, center frequencies of candidate NB-IoT PRBs used by the eNB 104 for transmission of NPSSs may be restricted to enable a reduction in frequency ranges to be searched by the UEs 102. It may be beneficial to reduce a number of frequency ranges to be searched by the UE 102, in some cases. For instance, processing power, memory, battery life, capabilities and/or other factors of NB-IoT UEs 102 may be reduced in comparison to other mobile devices in order to reduce and/or minimize cost, power consumption or other performance metrics.

As an example, the UE may be arranged to operate in accordance with a Third Generation Partnership Project (3GPP) Long Term Evolution (LTE) network. A group of candidate NB-IoT PRBs may be of a predetermined NB-IoT PRB bandwidth of 180 kHz, although embodiments are not limited by this example number. The network raster frequency may be 100 kHz although embodiments are not limited by this example number. When channel resources of the 3GPP LTE network are configured in an even bandwidth configuration, center frequencies of the group of candidate NB-IoT PRBs may be restricted to values based on a summation of 97.5 kHz and a multiple of 180 kHz.

Continuing the example, when channel resources of the 3GPP LTE network are configured in an odd bandwidth configuration, center frequencies of the group of candidate NB-IoT PRBs may be restricted to values based on a summation of 187.5 kHz and a multiple of 180 kHz. The center frequencies of the group of candidate NB-IoT PRBs may be further restricted to values for which a difference between the value and a nearest multiple of the network raster frequency is less than a first predetermined threshold (such as 17.5 kHz or 7.5 kHz or other suitable number). The frequency search windows may be restricted to frequency ranges of the channel resources for which at least a portion is within a second predetermined threshold of the center frequencies of the group of candidate NB-IoT PRBs. Accordingly, the center frequencies may be restricted to a pattern of the form (A + b* 180) kHz and may be further restricted to values of that pattern that are within a threshold of a nearest multiple of the network raster frequency. Accordingly, the NB-IoT PRBs may be relatively close to one of the multiples of the network raster frequency.

Channel raster frequency offsets may therefore be of a limited range, which may be beneficial to maintain a frequency search window. In some cases, the UE 102 may additionally experience a frequency offset due to hardware imperfections, impairments and/or design. This frequency offset that adds on to the channel raster frequency offset may be taken into account when selecting a size of a search window to be used by the UE 102 for each candidate NB-IoT PRB. The size of the search window may also be increased based on possible values of the channel raster frequency offset, and therefore it may be beneficial to restrict the NB-IoT PRBs center frequencies to values for which the channel raster frequency offset is restricted to a range such as 7.5 kHz, 17.5 kHz, or other suitable value.

At operation 707, the UE 102 may determine a multiple of a predetermined network raster frequency that is nearest to a detected center frequency of the NB-IoT PSS. At operation 710, the UE 102 may receive an NSSS from the eNB 104. In some embodiments, the NSSS may be received as part of the cell search to acquire the physical cell ID and radio frame boundary.

At operation 715, the UE 102 receives a control message from the eNB 104 that indicates the channel raster frequency offset used by the eNB 104 for the NPSS transmission. Accordingly, the UE 102 may determine the channel raster frequency offset based on the control message, in some cases. In some embodiments, one or more of the previously described control messages is used, including a narrowband master information block (N-MIB). It should be noted that in some embodiments, the NPSS may implicitly indicate the channel raster frequency offset (as previously described), in which case the UE 102 may determine the channel raster frequency offset based on the NPSS. Accordingly, operation 715 may not necessarily be included in such embodiments.

In some embodiments, when the NPSS is detected, the UE 102 may perform one or more of operations 707-730. At operation 725, the UE 102 may determine a transmission center frequency of an NB-IoT PRB of the NPSS based on a difference between the multiple of the network raster frequency (of operation 707) and the channel raster frequency offset. At operation730, the UE 102 may determine a frequency offset at the UES 102 receiver due to hardware non-idealities and/or imperfections at the UE 102. In some embodiments, the frequency offset may be based on one or more of the determined transmission center frequency, the determined channel raster frequency offset, and a detected center frequency of the NB-IoT PRB from the detection of the NB-IoT PSS. In some embodiments, a difference and/or summation based on any or all of those
terms may be used, in some cases. As a non-limiting example, the channel raster frequency offset may be determined based on a frequency difference between the determined transmission center frequency of the NB-IoT PRB and the determined nearest multiple of the predetermined network raster frequency. In some embodiments, the UE 102 may perform one or more of operations 707-730 when the NPSS is detected, although the scope of embodiments is not limited in this respect.

As previously described, the channel raster frequency offset may be indicated by the control message of operation 715 in some embodiments. However, the NPSS may implicitly indicate (and/or may be a function of) the channel raster frequency offset in some embodiments.

It should be noted that during a cell search, the UE 102 may not necessarily know which OFDM symbol will be used for transmission of the NPSS. Accordingly, the attempt to detect the NPSS may be performed asynchronously to any reference timing of the network. For instance, a correlation window of the detection may be moved continuously until a detection hit (such as a correlation value exceeding a threshold).

At operation 735, the UE 102 may decode a data packet included in a data PRB in a subsequent OFDM symbol in accordance with the determined frequency offset at the UE 102 receiver. In some embodiments, the data PRB may be centered at one of a group of candidate data PRB centers that may be different than the group of candidate NB-IoT PRB centers used for transmission of the NPSSs by the eNB 104. The scope of embodiments is not limited in this respect, however.

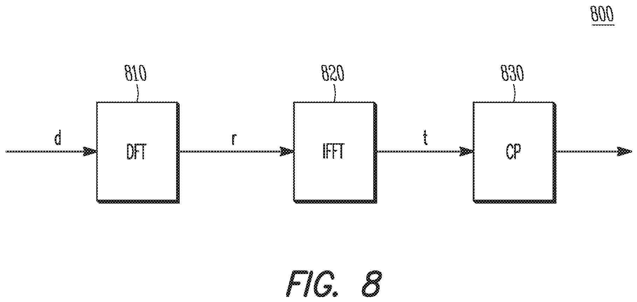

FIG. 8 illustrates an example mapping in accordance with some embodiments. In some embodiments, a function or mapping may be defined for up-sampling processes via zero-insertion between the DFT 810 and the IFFT 820 for the NPSS sequence generator 800 shown in FIG. 8. As an example, a length-12 vector may be mapped to a length-128 vector by insertion of 116 zeros. In some embodiments, the sequence r_j(1:12) may be mapped for input to the IFFT as [ r_j(1:7) 0_116 r_j(8:12) ], in which 0_116 represents a sequence of 116 zeros. In some embodiments, the sequence r_j(1:12) may be mapped for input to the IFFT as [ r_j(1:12) 0_116 ], in which the sequence r_j may be punctured in some manner.

In some embodiments proposed herein, the sequence r_j may be mapped, without puncturing, for input to the IFFT as [ r_j(6:12) 0_116 r_j(1:5) ]. In some cases, a higher peak correlation over all non-zero frequency offsets may be realized in comparison to embodiments that use different mappings.

## Claims

1. A method of communication by an apparatus for a base station (104) configured to communicate with a narrowband, NB, internet of things, IoT, user equipment, UE, NB-IoT UE (102), the apparatus including processing circuitry (202), the method comprising:
generating, by the processing circuitry, for transmission within a cell, a narrowband primary synchronization signal, NPSS, and secondary synchronization signal, NSSS, for time and frequency synchronization, wherein the NPSS and NSSS are transmitted in a NB carrier of a bandwidth of an NB-IoT, physical resource block, PRB, and comprise an NB physical layer cell ID of the cell; and
encoding, by the processing circuitry, signaling for transmission via a narrowband physical broadcast channel, NPBCH on the NB-IoT PRB, the signaling comprising a narrowband master information block, MIB-NB, wherein:
the NPBCH is transmitted on the NB carrier;
the MIB-NB indicates a NB channel raster offset for the NB-IoT PRB, wherein the NB channel raster offset comprises a frequency offset between a center frequency of the NB-IoT PRB and a multiple of a network raster frequency of 100 kHz, wherein for an in-band NB-IoT deployment, the NB channel raster offset is any one of +/- 57.5 kHz, +/-62.5 kHz, +/- 77.5 kHz, +/- 78.5 kHz, and +/- 82.5 kHz for NB-IoT PRBs of an even bandwidth allocation, and the NB channel raster offset is any one of +/- 52.5 kHz, +/-67.5 kHz, +/- 72.5 kHz, and +/- 87.5 kHz for NB-IoT PRBs of an odd bandwidth allocation.

2. The method according to claim 1, wherein:
the NB-IoT PRB is included in a group of one or more candidate NB-IoT PRBs allocated for transmissions of NPSSs during the one or more OFDM symbol periods, and
center frequencies of the candidate NB-IoT PRBs are restricted to values for which NB channel raster offsets are less than or equal to a predetermined threshold.

3. The method according to one of claims 1 to 2, wherein:
the eNB (104) is arranged to operate in accordance with a Third Generation Partnership Project, 3GPP, Long Term Evolution, LTE, network,
the candidate NB-IoT PRBs are included in channel resources of the 3GPP LTE network,
the candidate NB-IoT PRBs are of a predetermined NB-IoT PRB bandwidth of 180 kHz.

4. The method according to one of claims 1 to 3, wherein:
when the channel resources are configured in an even bandwidth configuration, the center frequencies of the candidate NB-IoT PRBs are further restricted to values based on a summation of 97.5 kHz and a multiple of 180 kHz, and
when the channel resources are configured in an odd bandwidth configuration, the center frequencies of the candidate NB-IoT PRBs are further restricted to values based on a summation of 187.5 kHz and a multiple of 180 kHz.

5. The method according to one of claims 1 to 4, wherein the apparatus further includes a transceiver to transmit the control message and to transmit the NPSS.

6. The method according to any of claims 1 to 5, wherein the processing circuitry (202) includes a baseband processor to encode the NB-MIB and to encode the NPSS and NSSS.

7. An apparatus for a base station (104) configured to communicate with a narrowband, NB, internet of things, IoT, user equipment, UE, NB-IoT UE (102), the apparatus including processing circuitry (202), wherein the processing circuitry (202) is configured to implement the method of any of claims 1 to 6.

8. A method of communication by an apparatus for use in a narrowband internet of things, NB-IoT, User Equipment, UE, the apparatus comprising: processing circuitry (202), the method comprising:
performing, by the processing circuitry, a cell search procedure to acquire time and frequency synchronization with a cell, the cell search procedure based on receipt of a narrowband primary synchronization signal, NPSS, and a narrowband secondary synchronization signal, NSSS, from a base station (104), wherein the NPSS and NSSS are received in a NB carrier of a bandwidth of a NB-IoT physical resource block, PRB, and comprise an NB physical layer cell ID of the cell; and
receiving, by the processing circuitry, signaling comprising a narrowband master information block, MIB-NB, that indicates a NB channel raster offset for the NB-IoT PRB, via a narrowband physical broadcast channel, NPBCH, wherein the NPBCH is received on the NB carrier and;
wherein the MIB-NB indicates a narrowband, NB, channel raster offset comprising a frequency offset between a center frequency of the NB-IoT PRB and a multiple of a network raster frequency of 100 kHz, wherein for an in-band NB-IoT deployment, the NB channel raster offset is any one of +/- 57.5 kHz, +/- 62.5 kHz, +/- 77.5 kHz, +/-78.5 kHz, and +/- 82.5 kHz for NB-IoT PRBs of an even bandwidth allocation, and the NB channel raster offset is any one of +/- 52.5 kHz, +/-67.5 kHz, +/- 72.5 kHz, and +/- 87.5 kHz for NB- IoT PRBs of an odd bandwidth allocation.

9. The method according to claim 8, wherein:
the NPSS is based on one or more outputs of a sequence generator that uses, as input, a root index of a group of candidate root indexes, and
the NB channel raster offset is based at least partly on the detected NPSS and a predetermined mapping between the candidate root indexes and a 5 group of candidate channel raster frequency offsets.

10. The method according to one of claims 8 to 9, wherein the processing circuitry (202) includes a baseband processor to determine the multiple of the network raster frequency, the NB channel raster frequency offset, and a transmission center frequency.

11. An apparatus for use in a narrowband internet of things, NB-IoT, User Equipment, UE, the apparatus comprising processing circuitry (202), wherein the processing circuitry is configured to cause the NB-IoT UE to implement the method of any of claims 8 to 10.

## Patentansprüche

1. Kommunikationsverfahren durch eine Vorrichtung für eine Basisstation (104), die konfiguriert ist, um mit einem Schmalband-, NB-, Internet der Dinge-, IoT-, Benutzergerät, UE, NB-IoT UE (102) zu kommunizieren, wobei die Vorrichtung eine Verarbeitungsschaltung (202) umfasst, wobei das Verfahren umfasst:
Erzeugen, durch die Verarbeitungsschaltung, zur Übertragung innerhalb einer Zelle, eines Schmalband-Primärsynchronisationssignals, NPSS, und Sekundärsynchronisationssignals, NSSS, zur Zeit- und Frequenzsynchronisation, wobei das NPSS und NSSS in einem NB-Träger einer Bandbreite eines physikalischen NB-IoT-Ressourcenblocks, PRB, übertragen werden und eine NB-Bitübertragungsschicht-Zellen-ID der Zelle umfassen; und
Codieren, durch die Verarbeitungsschaltung, von Signalisierung zur Übertragung über einen physikalischen Schmalband-Broadcastkanal, NPBCH, auf dem NB-IoT PRB, wobei die Signalisierung einen Schmalband-Masterinformationsblock, MIB-NB, umfasst, wobei:
der NPBCH auf dem NB-Träger übertragen wird;
der MIB-NB einen NB-Kanalrasterversatz für den NB-IoT PRB angibt, wobei der NB-Kanalrasterversatz einen Frequenzversatz zwischen einer Mittenfrequenz des NB-IoT PRB und einem Vielfachen einer Netzwerkrasterfrequenz von 100 kHz umfasst, wobei für einen In-Band-NB-IoT-Einsatz der NB-Kanalrasterversatz einer von +/- 57,5 kHz, +/- 62,5 kHz, +/- 77,5 kHz, +/- 78,5 kHz und +/- 82,5 kHz für NB-IoT-PRBs einer geraden Bandbreitenzuweisung ist, und der NB-Kanalrasterversatz einer von +/- 52,5 kHz, +/- 67,5 kHz, +/- 72,5 kHz und +/- 87,5 kHz für NB-IoT-PRBs einer ungeraden Bandbreitenzuweisung ist.

2. Verfahren nach Anspruch 1, wobei:
der NB-IoT PRB in einer Gruppe von einem oder mehreren Kandidaten-NB-IoT-PRBs enthalten ist, die für Übertragungen von NPSSs während der einen oder mehreren OFDM-Symbolperioden zugewiesen sind, und Mittenfrequenzen der Kandidaten-NB-IoT-PRBs auf Werte beschränkt sind, für die NB-Kanalrasterversätze kleiner oder gleich einem vorbestimmten Schwellenwert sind.

3. Verfahren nach einem der Ansprüche 1 bis 2, wobei:
der eNB (104) angeordnet ist, um gemäß einem Third Generation Partnership Project, 3GPP, Long Term Evolution, LTE, Netzwerk zu arbeiten,
die Kandidaten-NB-IoT-PRBs in Kanalressourcen des 3GPP-LTE-Netzwerks enthalten sind, die Kandidaten-NB-IoT-PRBs eine vorbestimmte NB-IoT PRB-Bandbreite von 180 kHz aufweisen.

4. Verfahren nach einem der Ansprüche 1 bis 3, wobei:
wenn die Kanalressourcen in einer geraden Bandbreitenkonfiguration konfiguriert sind, die Mittenfrequenzen der Kandidaten-NB-IoT-PRBs ferner auf Werte beschränkt sind, die auf einer Summierung von 97,5 kHz und einem Vielfachen von 180 kHz basieren, und
wenn die Kanalressourcen in einer ungeraden Bandbreitenkonfiguration konfiguriert sind, die Mittenfrequenzen der Kandidaten-NB-IoT-PRBs ferner auf Werte beschränkt sind, die auf einer Summierung von 187,5 kHz und einem Vielfachen von 180 kHz basieren.

5. Verfahren nach einem der Ansprüche 1 bis 4, wobei die Vorrichtung ferner einen Sendeempfänger zum Übertragen der Steuernachricht und zum Übertragen des NPSS umfasst.

6. Verfahren nach einem der Ansprüche 1 bis 5, wobei die Verarbeitungsschaltung (202) einen Basisbandprozessor zum Codieren des NB-MIB und zum Codieren des NPSS und NSSS umfasst.

7. Vorrichtung für eine Basisstation (104), die konfiguriert ist, um mit einem Schmalband-, NB-, Internet der Dinge-, IoT-, Benutzergerät, UE, NB-IoT UE (102) zu kommunizieren, wobei die Vorrichtung eine Verarbeitungsschaltung (202) umfasst, wobei die Verarbeitungsschaltung (202) konfiguriert ist, um das Verfahren nach einem der Ansprüche 1 bis 6 zu implementieren.

8. Kommunikationsverfahren durch eine Vorrichtung zur Verwendung in einem Schmalband-, NB-IoT-, Benutzergerät, UE, wobei die Vorrichtung umfasst: eine Verarbeitungsschaltung (202), wobei das Verfahren umfasst:
Durchführen, durch die Verarbeitungsschaltung, einer Zellensuchprozedur, um Zeit- und Frequenzsynchronisation mit einer Zelle zu erfassen, wobei die Zellensuchprozedur auf dem Empfang eines Schmalband-Primärsynchronisationssignals, NPSS, und eines Schmalband-Sekundärsynchronisationssignals, NSSS, von einer Basisstation (104) basiert, wobei das NPSS und NSSS in einem NB-Träger einer Bandbreite eines physikalischen NB-IoT-Ressourcenblocks, PRB, empfangen werden und eine NB-Bitübertragungsschicht-Zellen-ID der Zelle umfassen; und
Empfangen, durch die Verarbeitungsschaltung, von Signalisierung, die einen Schmalband-Masterinformationsblock, MIB-NB, umfasst, der einen NB-Kanalrasterversatz für den NB-IoT PRB angibt, über einen physikalischen Schmalband-Broadcastkanal, NPBCH, wobei der NPBCH auf dem NB-Träger empfangen wird und;
wobei der MIB-NB einen Schmalband-, NB-, Kanalrasterversatz angibt, der einen Frequenzversatz zwischen einer Mittenfrequenz des NB-IoT PRB und einem Vielfachen einer Netzwerkrasterfrequenz von 100 kHz umfasst,
wobei für einen In-Band-NB-IoT-Einsatz der NB-Kanalrasterversatz einer von +/- 57,5 kHz, +/-62,5 kHz, +/- 77,5 kHz, +/- 78,5 kHz und +/- 82,5 kHz ist,für NB-IoT-PRBs einer geraden Bandbreitenzuweisung, und der NB-Kanalrasterversatz einer von +/- 52,5 kHz, +/- 67,5 kHz, +/- 72,5 kHz und +/- 87,5 kHz für NB-IoT-PRBs einer ungeraden Bandbreitenzuweisung ist.

9. Verfahren nach Anspruch 8, wobei:
der NPSS auf einer oder mehreren Ausgaben eines Sequenzgenerators basiert, der als Eingabe einen Wurzelindex einer Gruppe von Kandidaten-Wurzelindizes verwendet, und
der NB-Kanalrasterversatz zumindest teilweise auf dem detektierten NPSS und einer vorbestimmten Abbildung zwischen den Kandidaten-Wurzelindizes und einer 5-Gruppe von Kandidaten-Kanalrasterfrequenzversatzen basiert.

10. Verfahren nach einem der Ansprüche 8 bis 9, wobei die Verarbeitungsschaltung (202) einen Basisbandprozessor zum Bestimmen des Vielfachen der Netzwerkrasterfrequenz, des NB-Kanalrasterfrequenzversatzes und einer Übertragungsmittenfrequenz umfasst.

11. Vorrichtung zur Verwendung in einem Schmalband-, NB-IoT-, Benutzergerät, UE, wobei die Vorrichtung eine Verarbeitungsschaltung (202) umfasst, wobei die Verarbeitungsschaltung konfiguriert ist, um das NB-IoT UE zu veranlassen, das Verfahren nach einem der Ansprüche 8 bis 10 zu implementieren.

## Revendications

1. Un procédé de communication par un appareil pour une station de base (104) configurée pour communiquer avec un équipement utilisateur, UE, de l'Internet des objets, IoT, à bande étroite, NB, NB-IoT UE (102), l'appareil comportant une circuiterie de traitement (202), le procédé comprenant :
la génération, par la circuiterie de traitement, pour transmission à l'intérieur d'une cellule, d'un signal de synchronisation primaire à bande étroite, NPSS, et d'un signal de synchronisation secondaire à bande étroite, NSSS, pour une synchronisation en temps et en fréquence, dans lequel les NPSS et NSSS sont transmis dans une porteuse NB d'une largeur de bande d'un bloc de ressource physique, PRB, NB-IoT et comprennent un identifiant de cellule de couche physique NB de la cellule ; et
le codage, par la circuiterie de traitement, d'une signalisation pour une transmission via un canal physique de broadcast à bande étroite, NPBCH, sur le NB-IoT PRB, la signalisation comprenant un bloc d'information maître à bande étroite, MIB-NB, dans lequel :
le NPBCH est transmis sur la porteuse NB ;
le MIB-NB indique un décalage de trame de canal NB pour le NB-IoT PRB, dans lequel le décalage de trame de canal NB comprend un décalage en fréquence entre une fréquence centrale du NB-IoT PRB et un multiple d'une fréquence de trame de réseau de 100 kHz,
dans lequel, pour un déploiement NB-IoT dans la bande, le décalage de trame de canal NB est l'un parmi +/- 57,5 kHz, +/- 62,5 kHz, +/- 77,5 kHz, +/- 78,5 kHz et +/- 82,5 kHz pour des NB-IoT PRB d'une attribution de largeur de bande paire, et le décalage de trame de canal NB est l'un parmi +/- 52,5 kHz, +/- 67,5 kHz, +/- 72,5 kHz et +/- 87,5 kHz pour des NB-IoT PRB d'une attribution de largeur de bande impaire.

2. Le procédé selon la revendication 1, dans lequel :
le NB-IoT PRB est compris dans un groupe d'un ou plusieurs NB-IoT PRB candidats attribués pour des transmissions de NPSS durant les une ou plusieurs périodes de symbole OFDM, et
les fréquences centrales des NB-IoT PRB candidats sont limitées à des valeurs pour lesquelles des décalages de trame de canal NB sont inférieurs ou égaux à un seuil prédéterminé.

3. Le procédé selon une des revendications 1 à 2, dans lequel :
l'eNB (104) est agencé pour fonctionner conformément à un réseau Évolution à long terme, LTE, du Projet de partenariat de troisième génération, 3GPP,
les NB-IoT PRB candidats sont compris dans des ressources de canal du réseau LTE 3GPP,
les NB-IoT PRB candidats sont d'une largeur de bande de NB-IoT PRB prédéterminée de 180 kHz.

4. Le procédé selon une des revendications 1 à 3, dans lequel :
quand les ressources de canal sont configurées dans une configuration de largeur de bande paire, les fréquences centrales des NB-IoT PRB candidats sont limitées en outre à des valeurs sur la base d'une somme de 97,5 kHz et d'un multiple de 180 kHz, et
quand les ressources de canal sont configurées dans une configuration de largeur de bande impaire, les fréquences centrales des NB-IoT PRB candidats sont limitées en outre à des valeurs sur la base d'une somme de 187,5 kHz et d'un multiple de 180 kHz.

5. Le procédé selon une des revendications 1 à 4, dans lequel l'appareil comporte en outre un émetteur-récepteur pour transmettre le message de contrôle et pour transmettre le NPSS.

6. Le procédé selon une des revendications 1 à 5, dans lequel la circuiterie de traitement (202) comporte un processeur de bande de base pour coder le NB-MIB et pour coder les NPSS et NSSS.

7. Un appareil pour une station de base (104) configurée pour communiquer avec un équipement utilisateur, UE, de l'Internet des objets, IoT, à bande étroite, NB, NB-IoT UE (102), l'appareil comportant une circuiterie de traitement (202), dans lequel la circuiterie de traitement (202) est configurée pour mettre en oeuvre le procédé selon l'une des revendications 1 à 6.

8. Un procédé de communication par un appareil pour l'utilisation dans un équipement utilisateur, UE, de l'Internet des objets, IoT, à bande étroite, NB, NB-IoT UE, l'appareil comprenant une circuiterie de traitement (202), le procédé comprenant :
la réalisation, par la circuiterie de traitement, d'une procédure de recherche de cellule pour acquérir une synchronisation en temps et en fréquence avec une cellule, la procédure de recherche de cellule étant basée sur la réception d'un signal de synchronisation primaire à bande étroite, NPSS, et d'un signal de synchronisation secondaire à bande étroite, NSSS, à partir d'une station de base (104), dans lequel les NPSS et NSSS sont reçus dans une porteuse NB d'une largeur de bande d'un bloc de ressource physique, PRB, NB-IoT et comprennent un identifiant de cellule de couche physique NB de la cellule ; et
la réception, par la circuiterie de traitement, d'une signalisation comprenant un bloc d'information maître à bande étroite, MIB-NB, qui indique un décalage de trame de canal NB pour le NB-IoT PRB, via un canal physique de broadcast à bande étroite, NPBCH, dans lequel le NPBCH est reçu sur la porteuse NB ; et
dans lequel le MIB-NB indique un décalage de trame de canal NB comprenant un décalage en fréquence entre une fréquence centrale du NB-IoT PRB et un multiple d'une fréquence de trame de réseau de 100 kHz,
dans lequel, pour un déploiement NB-IoT dans la bande, le décalage de trame de canal NB est l'un parmi +/- 57,5 kHz, +/- 62,5 kHz, +/- 77,5 kHz, +/- 78,5 kHz et +/- 82,5 kHz pour des NB-IoT PRB d'une attribution de largeur de bande paire, et le décalage de trame de canal NB est l'un parmi +/- 52,5 kHz, +/- 67,5 kHz, +/- 72,5 kHz et +/- 87,5 kHz pour des NB-IoT PRB d'une attribution de largeur de bande impaire.

9. Le procédé selon la revendication 8, dans lequel :
le NPSS est basé sur une ou plusieurs sorties d'un générateur de séquence qui utilise, comme entrée, un indice racine d'un groupe d'indices racines candidats, et
le décalage de trame de canal NB est basé au moins en partie sur le NPSS détecté et un mappage prédéterminé entre les indices racines candidats et un groupe 5 de décalages en fréquence de trame de canal candidats.

10. Le procédé selon une des revendications 8 à 9, dans lequel la circuiterie de traitement (202) comporte un processeur de bande de base pour déterminer le multiple de la fréquence de trame de réseau, le décalage en fréquence de trame de canal NB et une fréquence centrale de transmission.

11. Un appareil pour l'utilisation dans un équipement utilisateur, UE, de l'Internet des objets à bande étroite, NB-IoT, l'appareil comprenant une circuiterie de traitement (202), dans lequel la circuiterie de traitement est configurée pour amener le NB-IoT UE à mettre en oeuvre le procédé selon l'une des revendications 8 à 10.
